# EUROPÄISCHE PATENTANMELDUNG

(11) **EP 0 629 420 A1**
(43) Veröffentlichungstag der Anmeldung: **21.12.1994**
(21) Anmeldenummer: 94108568.0
(22) Anmeldetag: 03.06.1994
(51) Int. Cl.: B01D 1/00, B01D 3/00, D01F 13/00, C07D 207/267

(54) **Verfahren zur Aufarbeitung von Lösungsmittelgemischen enthaltend schwersiedende Bestandteile sowie dafür geeignete Vorrichtung**

(30) Priorität: 12.06.1993 DE 4319534
(71) Anmelder: HOECHST AKTIENGESELLSCHAFT, D-65929 Frankfurt am Main (DE)
(72) Erfinder: Miess, Georg-Emerich, Dr., D-93049 Regensburg (DE); Roth, Peter Manfred, D-65817 Eppstein (DE); Heinrich, Karl, D-86507 Oberottmarshausen (DE); Rewitzer, Siegfried, D-93346 Ihrlerstein (DE)

(57) **Zusammenfassung**

Beschrieben wird ein Verfahren und eine Anlage zur Lösungsmittelrückgewinnung zur Aufarbeitung von Gemischen, welche organische Lösungsmittel, schwersiedende Bestandteile, insbesondere Salze und gegebenenfalls Wasser enthalten. Die Anlage umfaßt eine Aufkonzentrierungsvorrichtung (2), eine Trennvorrichtung (7) und eine Trennkolonne (10).

## Beschreibung

Die vorliegende Erfindung betrifft ein Verfahren zur Aufarbeitung von Lösungsmittelgemischen enthaltend schwersiedende Bestandteile, insbesondere Salze, sowie eine zur Durchführung dieses Verfahrens angepaßte Vorrichtung. Besonders geeignet ist das Verfahren und die Vorrichtung zur Aufarbeitung von wasserhaltigen Lösungsmittelgemischen, die schwersiedende Bestandteile und/oder Salze enthalten.

Bei der Herstellung und Nachbehandlung von Spinnfasern fallen wässrige Lösungen an, die neben organischen Lösungsmitteln Salze und/oder andere schwersiedende Verunreinigungen enthalten. Üblicherweise wird das verunreinigte Spinnlösungsmittel im Anschluß an das eigentliche Spinnverfahren und/oder an eine Nachbehandlung der Spinnfasern, wie Verstrecken, Waschen oder Fixieren, gesammelt und in einer Lösungsmittel-Rückgewinnungsanlage einer Reinigung unterzogen. Im Anschluß daran wird das aufgearbeitete Lösungsmittel in der Regel dem Spinn- und/oder Nachbehandlungsverfahren zugeführt. In Kirk-Othmer: "Encyclopedia of chemical Technology", Vol. 21, 3^{rd} Edition, John Wiley & Sons (1983), Stichwort "Solvent Recovery", S. 357, sind Beispiele für vorbekannte Aufarbeitungsverfahren zu finden.

In den letzten Jahren sind die Anforderungen an den Betrieb von Anlagen, in denen Spinnfasern hergestellt und/oder nachbehandelt werden, zunehmend strenger geworden. Dies betrifft sowohl die Einschränkung der Emission von chemischen Stoffen, die durch den Betrieb solcher Anlagen hervorgerufen wird, als auch den Verbrauch an Energie oder Rohstoffen beim Betrieb dieser Anlagen.

Es hat sich insbesondere die Aufarbeitung von wässrigen Gemischen aus Spinnanlagen als schwierig herausgestellt, die einen hohen Anteil an schwersiedenden Bestandteilen, wie Salzen aufweisen.

Salze werden insbesondere bei der Herstellung von Fasern aus in organischen Lösungsmitteln löslichen aromatischen Polyamiden (Aramiden) in hohen Konzentrationen der Spinnlösung als Löslichkeitsvermittler zugesetzt. Für die Wiederverwendung des Spinnlösungsmittels muß dieses mit einer möglichst hohen Reinheit zur Verfügung stehen. Bei der Aufarbeitung von salzhaltigen Abwässern aus solchen Spinnanlagen hat sich gezeigt, daß Schwierigkeiten bei der vollständigen Abtrennung von Salzen oder anderen schwersiedenden Bestandteilen der Abwässer, insbesondere durch eine thermische Schädigung des wiederzuverwendenden Lösungsmittels, auftreten können.

In der JP-A-61-119,673 wird vorgeschlagen, die Aufarbeitung von N-Methylpyrrolidon durch eine Kombination zweier Kolonnen durchzuführen, die bei unterschiedlichen Drucken betrieben werden. Dieses Verfahren eignet sich nicht gut für die Trennung von Lösungsmittelgemischen, die feste, hochsiedende Bestandteile, wie Salze enthalten, da es hier durch Ausscheidung der Festkörper in den Kolonnen zu häufigen Betriebsstörungen kommt.

Die Rückgewinnung des organischen Lösungsmittels aus salzhaltigen wässrigen Lösungen wird üblicherweise durch Einschalten einer Extraktionsstufe in die Lösungsmittel-Rückgewinnungsanlage durchgeführt. Dabei kommen üblicherweise Extraktionsmittel, wie Dichlormethan, zum Einsatz, deren Aufarbeitung ihrerseits zu ungewünschten Emissionen führen würde oder deren Aufarbeitung wiederum zu einem erhöhten Aufwand an Energie und Rohstoffen führen würde.

Beispiele für extraktive Aufarbeitungsverfahren sind in der JP-A-57-96,019, der US-A-4,859,781 oder der JP-A-61-238,735 aufgeführt.

Es besteht demnach ein weiterer Bedarf nach Verfahren und Vorrichtungen, mit denen Abfälle aus der Herstellung oder Nachbehandlung von Spinnfasern mit einem Minimum an Energiebedarf sowie Verbrauch von Rohstoffen und einem Minimum an Emissionen von chemischen Stoffen aufgearbeitet werden können und mit denen organische Lösungsmittel, insbesondere Spinnlösungsmittel, hohen Reinheitsgrads zurückgewonnen werden können.

Mit der vorliegenden Erfindung wird ein Verfahren bereitgestellt, welches thermisch schonend ist sowie eine dafür angepaßte Vorrichtung bereitgestellt, welche einfach und mit an sich üblichen Komponenten zu realisieren ist.

Die vorliegende Erfindung betrifft ein Verfahren zur Aufarbeitung von Gemischen, welche organische Lösungsmittel und schwersiedende Bestandteile und gegebenenfalls Wasser enthalten, umfassend die Maßnahmen:
a) Einbringen des Gemisches in eine Aufkonzentriervorrichtung (2) einer Lösungsmittel-Rückgewinnungsanlage (32),
b) Aufkonzentrieren des Gemisches in besagter Aufkonzentriervorrichtung (2) durch Abdampfen eines Teils einer leichtflüchtigen Fraktion und Zuführen dieser leichtflüchtigen Fraktion zu einer Trennkolonne (10),
c) Ableiten mindestens eines Teils des aufkonzentrierten Gemisches aus der Aufkonzentriervorrichtung (2) und Einleiten dieses Teils in eine Trennvorrichtung (7), worin besagte schwersiedende Bestandteile aus besagtem aufkonzentriertem Gemisch abgetrennt werden und aus der Lösungsmittel-Rückgewinnungsanlage (32) ausgeschleust werden,
d) Ableiten des von besagten schwersiedenden Bestandteilen befreiten aufkonzentrierten Gemisches aus besagter Trennvorrichtung (7) und Zuführen besagten Gemisches zusammen mit der leichtflüchtigen Fraktion aus Schritt b) zu einer Trennkolonne (10),
e) Auftrennen des Gemisches aus Schritt d) in der Trennkolonne (10) in eine leichter siedende Fraktion, welche über den Kolonnenkopf (17) abgezogen wird und in eine schwerer siedende Fraktion, welche über den Sumpf (14) aus der Kolonne entfernt wird, und
f) Ableiten zumindest eines Teils der nach Schritt e) erhaltenen leichter siedenden Fraktion und der schwerer siedenden Fraktion aus der Lösungsmittel-Rückgewinnungsanlage (32).

Besonders bevorzugte Ausführungsformen dieses erfindungsgemäßen Verfahrens sind in den Ansprüchen 2 bis 9 definiert.

Mit dem erfindungsgemäßen Verfahren lassen sich Gemische aufarbeiten, welche organische Lösungsmittel und schwersiedende Bestandteile, insbesondere Salze, und gegebenenfalls zusätzlich noch Wasser enthalten.

Das Verfahren ist daher besonders vorteilhaft zur Aufarbeitung von gebrauchten Spinnbäder aus Naßspinnverfahren, in denen die zum Lösen des versponnenen Polymers eingesetzten Lösungsmittel, das Fällmittel, in den meisten Fällen Wasser, und in vielen Fällen hochsiedende organische Substanzen, z.B. solche die als Spinnhilfsmittel eingesetzt werden, und anorganische Salze enthalten sind.

Der Begriff "gebrauchte Spinnbäder" umfaßt auch flüssige Gemische die aus Mischungen der eigentlichen Spinnbäder (Fällbäder) mit anderen, aus Seitenströmen und Nachbehandlungsaggregaten einer Spinnanlage stammenden Lösungmitteln (z.B. den bei Nachbehandlung der Fasern und der Düsenreinigung eingesetzten Lösungsmitteln) und Wasser z.B. Waschwässern, Absorptionsanlagen-Wasser u.dgl.

Obwohl das erfindungsgemäße Verfahren auch sehr gut für die Trennung rein organischer hoch- und niedriger siedender Substanzen geeignet ist, soll es im Folgenden im Hinblick auf seinen bevorzugten Einsatz zur Aufarbeitung von gebrauchten Spinnbädern, die wegen ihres Gehalten an Wasser und Salzen besonders schwierig aufzuarbeiten sind, detailliert beschrieben werden.

Als organische Lösungsmittel kommen dabei alle Lösungsmittel in Betracht, die bei der Herstellung und Verarbeitung von Synthesefasern eingesetzt werden. Es kann sich auch um Gemische von organischen Lösungsmitteln handeln.

Vorzugsweise handelt es sich bei diesen organischen Lösungsmitteln um polare aprotische Lösungsmittel, wie Dimethylacetamid, Dimethylformamid, N-Methylpyrrolidon und Dimethylsulfoxid.

Der Gehalt der organischen Lösungsmitteln in den anfallenden verbrauchten wässrigen Gemischen kann in weiten Bereichen schwanken; er beträgt typischerweise 10 bis 85 Gew.%, insbesondere 20 bis 69,9 Gew.%, bezogen auf die Mischung aus organischem Lösungsmittel, Wasser und schwersiedenden Bestandteilen.

Der Gehalt an Wasser in den anfallenden verbrauchten wässrigen Gemischen kann ebenfalls in weiten Bereichen schwanken; er beträgt typischerweise 10 bis 85 Gew.%, insbesondere 30 bis 79,9 Gew.%, bezogen auf die Mischung aus organischem Lösungsmittel, Wasser und schwersiedenden Bestandteilen.

Der Gehalt der schwersiedenden Bestandteile in den anfallenden verbrauchten wässrigen Gemischen kann ebenfalls in weiten Bereichen schwanken; er liegt typischerweise unter 15 Gew.-%, insbesondere zwischen etwa 0,1 und 10 Gew.%, bezogen auf die Mischung aus organischem Lösungsmittel, Wasser und schwersiedenden Bestandteilen.

Unter "schwersiedenden Bestandteilen" im Sinne der vorliegenden Erfindung sind alle Bestandteile des wässrigen Gemisches zu verstehen, die im Vergleich zu der höher siedenden Komponente der aufzuarbeitenden Flüssigkeit, sei es Lösungsmittel oder Wasser, schwer oder nicht verdampfbar sind. Dabei handelt es sich in der Regel um Salze, die als Löslichkeitsvermittler in der Spinnlösung eingesetzt worden sind oder die als Verarbeitungshilfsmittel in der Nachbehandlungsstufe gedient haben; es kann sich aber auch um schwer oder nicht verdampfbare Bestandteile von Präparationen oder Avivagen oder um Reste von Mattierungsmitteln oder Pigmenten handeln, die bei der Nachbehandlung der Fasern anfallen und mit dem Lösungsmittel/Wasser Gemisch abtransportiert werden. Beispiele für Salze sind Alkalihalogenide und Erdalkalihalogenide wie Lithiumchlorid und insbesondere Calciumchlorid.

Die schwersiedenden Bestandteile können im wässrigen Gemisch gelöst, suspendiert oder dispergiert vorliegen. Es kann sich auch um Gemischen von schwersiedenden Bestandteilen handeln.

In der Aufkonzentriervorrichtung (2) wird das wässrige Gemisch durch Abdampfen eines Teils einer leichtflüchtigen Fraktion konzentriert.

Bei der Aufkonzentriervorrichtung (2) kann es sich um jede für diesen Zweck geeignete Vorrichtung handeln. Einige Beispiele dafür sind verschiedene Typen an sich bekannter Verdampfer, wie beheizte Kessel, vorzugsweise mit Rührwerken.

Um auch Gemische verarbeiten zu können, deren Komponenten bei längerem Verweilen unter höherer Temperatur zur Zersetzung neigen, oder deren Siedepunkt unter normalem Druck so hoch liegt, daß für ihre Verdampfung kein geeignetes Heizmedium zur Verfügung steht, sind die genannten Vorrichtungen zweckmäßigerweise für das Arbeiten bei erniedrigtem Druck ausgelegt und/oder mit Einrichtungen versehen, die eine Verdampfung der verdampfbaren Komponenten bei kurzer Verweilzeit an sehr heißen Oberflächen ermöglichen.

Unter Berücksichtigung dieser Gesichtspunkte wird im Einzelfall eine geeignete Vorrichtung ausgewählt und ggf. im Vakuum betrieben.

Die Aufkonzentriervorrichtung (2) wird so betrieben, daß mindesten ein Teil des aufkonzentrierten Gemisches aus der Aufkonzentriervorrichtung (2) abgeführt wird und in eine Trennvorrichtung (7) eingeleitet wird, worin besagte schwersiedende Bestandteile aus besagtem aufkonzentriertem Gemisch abgetrennt werden und aus der Lösungsmittel-Rückgewinnungsanlage (32) ausgeschleust werden. In einer weiteren Ausführungsform des erfindungsgemäßen Verfahrens wird ein Teil des in der Aufkonzentriervorrichtung (2) aufkonzentrierten wässrigen Gemisches in besagte Aufkonzentriervorrichtung (2) zurückgeführt und einer weiteren Aufkonzentrierung unterzogen.

Das Verhältnis zwischen der aus der Aufkonzentriervorrichtung (2) in die Trennvorrichtung (7) abgeführten Menge an Konzentrat zur Menge an Konzentrat, welches aus der Aufkonzentriervorrichtung (2) abgeführt und in diese zurückgeführt wird, richtet sich nach der Zusammensetzung des zu trennenden Ausgangsgemisches und der für eine effektive Abscheidung der schwersiedenden Bestandteile, insbesondere der Salze, in der Trennvorrichtung (7) optimalen Zusammensetzung des Gemisches. Entsprechend der Variationsbreite der Ausgangszusammensetzung und der Löslichkeitsverhältnisse der Hochsieder und/oder der Salze im Gemisch und der davon abhängigen optimalen Trennkonzentration kann diese Verhältnis in weiten Bereichen schwanken.

Von dem der Aufkonzentriervorrichtung (2) zugeführten wässrigen Gemisch wird ein Teil einer leichtflüchtigen Fraktion abgedampft und einer Trennkolonne (10) zugeführt. Der Gewichtsanteil der abgedampften leichtflüchtigen Fraktion, bezogen auf einen Gewichtsanteil des zugeführten wässrigen Gemisches, kann in weiten Bereichen schwanken. Typische Werte liegen im Bereich von etwa 50 bis 95 Gew.%.

In der Trennkolonne (10) erfolgt eine Auftrennung des hauptsächlich aus Wasser und organischem Lösungsmittel bestehenden Gemisches in eine leichtflüchtige Fraktion und in eine schwerflüchtige Fraktion. Je nach der Natur des aufzutrennenden Gemisches wird Wasser über Kopf abgezogen oder reichert sich im Sumpf an. Bei der bevorzugte Aufarbeitung eines Gemisches aus N-Methylpyrrolidon und Wasser wird Wasser über Kopf abgezogen und N-Methylpyrrolidon fällt im Sumpf an.

Bei der Trennkolonne (10) kann es sich um jede für diesen Zweck geeignete Vorrichtung handeln. Beispiele dafür sind Destillationskolonnen, und insbesondere Rektifikationskolonnen mit Böden, Füllkörpern oder geordneten Packungen.

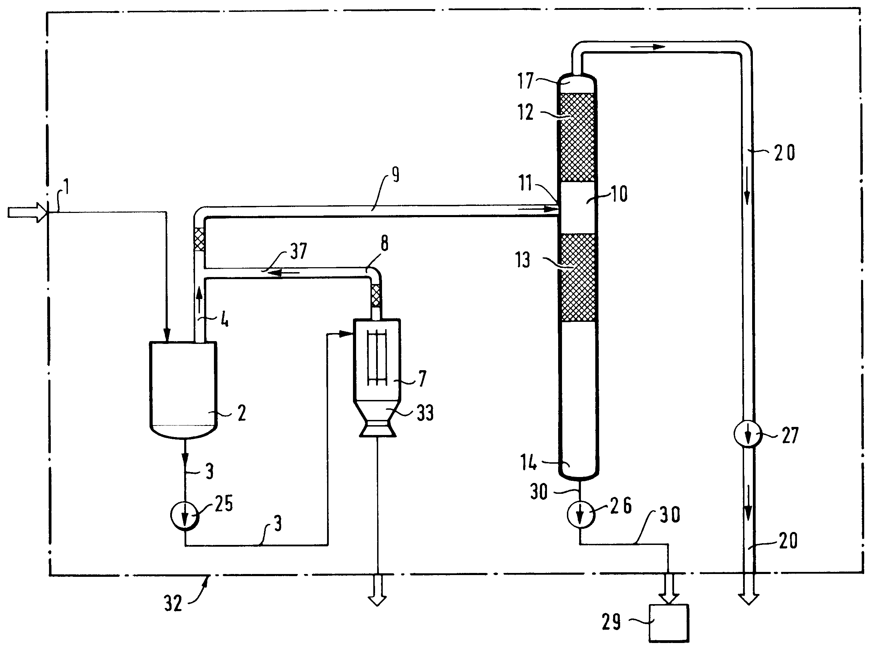

Je nach den aktuellen Energiekosten kann es vorteilhaft sein, die Trennung durch eine mehrstufige Rektifikation d.h. durch mehrere im Verbund arbeitende Kolonnen auszuführen. Die in der Figur angegebene Trennkolonne (10) symbolisiert auch derartige mehrstufige Systeme bestehend aus mehreren im Verbund arbeitende Kolonnen.

In der Trennvorrichtung (7) erfolgt eine Abtrennung der schwersiedenden Bestandteile aus dem aufkonzentriertem wässrigen Gemisch, welches aus der Aufkonzentriervorrichtung (2) stammt, durch Verdampfen von Wasser und organischem Lösungsmittel. Die verbleibenden schwersiedenden Bestandteile werden aus der Trennvorrichtung (7) und somit aus der Lösungsmittel-Rückgewinnungsanlage (32) ausgeschleust.

Wie bereits bei der Beschreibung der Aufkonzentriervorrichtung (2) ausgeführt, ist auch die Trennvorrichtung (7) zweckmäßigerweise für das Arbeiten bei erniedrigtem Druck ausgelegt und/oder mit Einrichtungen versehen, die eine Verdampfung der verdampfbaren Komponenten bei kurzer Verweilzeit an sehr heißen Oberflächen ermöglichen, um auch Gemische verarbeiten zu können, deren Komponenten bei längerem Verweilen unter höherer Temperatur zur Zersetzung neigen, oder deren Siedepunkt unter normalem Druck so hoch liegt, daß für ihre Verdampfung kein geeignetes Heizmedium zur Verfügung steht.

Bei der Trennvorrichtung (7) kann es sich um jede nach diesen Gesichtspunkten konstruierte und damit für diesen Zweck geeignete Vorrichtung handeln.

Besonders vorteilhaft ist hier der Einsatz von Dünnschichtverdampfern und Trocknern diverser Bauart, die Einrichtungen zur mechanischen Entfernung der nicht verdampfbaren Gemischanteile von der beheizten Verdampferfläche aufweisen und vorzugsweise so konstruiert sind, daß ein kontinuierlicher Betrieb möglich wird.

Die nicht verdampfbaren Bestandteile der Gemische sind in der Regel Feststoffe, z.B. die oben genannten Salze oder stellen hochviskose Flüssigkeiten oder pastöse Substanzen dar, die über bekannte, geeignete Schleusen aus der Trennvorrichtung (7) abgezogen werden, wobei der Schleuseninhalt im Bedarfsfall durch eine geeignete Spülflüssigkeit (bei Salzen z.B. durch Wasser) aus der Schleuse herausgespült werden kann.

Das von besagten schwersiedenden Bestandteilen befreite aufkonzentrierte Gemisch wird aus der Trennvorrichtung (7) abgeleitet und einer Trennkolonne (10) zugeführt, wobei dieser Stoffstrom gegebenenfalls vor dem Einleiten in die Trennkolonne (10) mit dem aus der Aufkonzentriervorrichtung (2) stammenden leichtflüchtigen Fraktion kombiniert wird.

Die Zuleitung des von besagten schwersiedenden Bestandteilen befreiten aufkonzentrierten Gemisches in die Trennkolonne (10) erfolgt vorzugsweise über einen Zulauf (11) der in der Höhe des Kolonnenkörpers angebracht ist, in welcher die Zusammensetzung der jeweiligen Fraktion im Innern der Kolonne in etwa der Zusammensetzung des zugeführten Gemisches entspricht.

Besonders bevorzugt wird zumindest die Aufkonzentriervorrichtung (2) oder die Trennvorrichtung (7) oder die Trennkolonne (10) unter Vakuum betrieben. Damit ist eine besonders schonende Wederaufarbeitung des organischen Lösungsmittels zu erreichen.

Zur Durchführung des erfindungsgemäßen Verfahrens werden an sich bekannte und übliche Trennvorrichtungen in einfacher Weise zu einer Vorrichtung kombiniert.

Die Erfindung betrifft auch eine Lösungsmittel-Rückgewinnungsanlage (32) zur Aufarbeitung von Gemischen, welche organische Lösungsmittel, schwersiedende Bestandteile, insbesondere Salze und gegebenenfalls Wasser enthalten, umfassend eine Aufkonzentriervorrichtung (2), eine Trennvorrichtung (7) und eine Trennkolonne (10), die in folgender Weise miteinander verbunden sind und von Stoffströmen durchlaufen werden:
A) Zuleitung (1) welche in die Aufkonzentriervorrichtung (2) mündet und zum Einbringen eines Gemisches in die Aufkonzentriervorrichtung (2) der Lösungsmittel-Rückgewinnungsanlage (32) dient,
B) Ableitung (4) zum Abführen einer verdampften leichtflüchtigen Fraktion aus besagter Aufkonzentriervorrichtung (2) und zum Zuleiten dieser Fraktion zu einer Trennkolonne (10),
C) Ableitung (3) zum Abführen des Konzentrats bestehend aus den schwerer siedenden Bestandteilen des Lösungsmittelgemisches aus der Aufkonzentriervorrichtung (2), welche Ableitung (3) in eine Trennvorrichtung (7) mündet,
D) Schleuse (33) zum Austragen der in der Trennvorrichtung (7) abgetrennten schwersiedenden Bestandteile aus der Lösungsmittel-Rückgewinnungsanlage (32),
E) Abführleitung (8) für das in der Trennvorrichtung (7) von besagten schwerlöslichen Bestandteilen gereinigte Konzentrat, welche direkt in die Trennkolonne (10) mündet oder in die Ableitung (4) zum Abführen einer verdampften leichtflüchtigen Fraktion aus der Aufkonzentriervorrichtung (2) und zusammen mit dieser in die Trennkolonne (10) mündet,
F) Leitung (20) zum Ableiten des erhaltenen Kondensats aus der Trennkolonne (10), und
G) Abführleitung (30), über welche die in der Trennkolonne (10) erhaltene schwerer siedende Fraktion aus dem Sumpf (14) entfernt wird und welche zum Ausschleusen der schwerer siedenden Fraktion aus der Lösungsmittel-Rückgewinnungsanlage (32) dient.

Besonders bevorzugte Ausführungsformen der erfindungsgemäßen Vorrichtung sind in den Ansprüchen 11 bis 14 definiert.

In der Figur wird die vorliegende Erfindung beispielhaft beschrieben. In dieser Figur ist eine Prinzipskizze des erfindungsgemäßen Verfahrens und der erfindungsgemäßen Vorrichtung dargestellt.

Aus einer nicht dargestellten Spinnvorrichtung wird ein wässriges Lösungsmittelgemisch einer Wiederaufarbeitungsanlage über eine Zuleitung (1) einer Lösungsmittel-Rückgewinnungsanlage (32) zugeführt. Dieses Lösungsmittelgemisch enthält neben Wasser das betreffende Spinnlösungsmittel, beispielsweise Dimethylacetamid oder N-Methylpyrrolidon, und gelöste oder suspendierte oder dispergierte schwersiedende Bestandteile, wie Bestandteile von Präparationen oder Avivagen und insbesondere Salze.

Die Zuleitung (1) mündet in eine Aufkonzentriervorrichtung (2), worin das Lösungsmittelgemisch durch Abdampfen eines Teils einer leichtflüchtigen Fraktion, welche im Fall eines NMP/Wasser Gemisches hauptsächlich Wasser enthält, aufkonzentriert wird. Die verdampfte leichtflüchtige Fraktion wird über die Leitung (4) abgeführt und einer Trennkolonne (10) zugeleitet, welche insbesondere als Rektifikationskolonne ausgestaltet ist.

Das Konzentrat bestehend aus den schwerer siedenden Bestandteilen des wässrigen Lösungsmittelgemisches wird über die Ableitung (3) aus der Aufkonzentriervorrichtung (2) abgeführt und einer Trennvorrichtung (7) zugeleitet. Dabei handelt es sich insbesondere um einen Dünnschichtverdampfer. In der Trennvorrichtung (7) werden schwersiedende Bestandteile aus dem Konzentrat abgetrennt und aus der Lösungsmittel-Rückgewinnungsanlage (32) entfernt, üblicherweise über die Schleuse (33); bei den schwersiedenden Bestandteilen handelt es sich insbesondere um Salze, die im Konzentrat gelöst oder suspendiert oder dispergiert sind.

Alle Aggregate (2), (7) und (10) sind mit Manometern ausgestattet zur Überwachung des Arbeitsdruckes.

Das von besagten schwersiedenden Bestandteilen befreite aufkonzentrierte Gemisch wird aus der Trennvorrichtung (7) über Leitung (8) abgeführt und zusammen mit der leichtersiedenden Fraktion aus der Aufkonzentriervorrichtung (2) einer Trennkolonne (10) zugeführt. Dies erfolgt über Leitung (9) und über einen Zulauf (11), der in der Höhe des Kolonnenkörpers angebracht ist, in welcher die Zusammensetzung der jeweiligen Fraktion im Innern der Kolonne in etwa der Zusammensetzung des zugeführten Gemisches entspricht. Die Trennkolonne (10) weist die üblichen Böden und/oder Packungsschichten (12) und (13) auf. In der Trennkolonne (10) wird das über den Zulauf (11) zugeführte Flüssigkeitsgemisch in eine leichter siedende Fraktion und in eine schwerer siedende Fraktion getrennt. Dabei wird die leichter siedende Fraktion, welche im Fall eines NMP/Wasser Gemisches aus Wasser besteht, über den Kolonnenkopf (17) über eine Leitung (20) abgezogen und zumindest ein Teil dieser leichter siedenden Fraktion wird aus der Lösungsmittel-Rückgewinnungsanlage (32) abgeführt und wird üblicherweise einer biologischen Kläranlage zugeführt. Ein weiterer Teil der anfallenden leichter siedenden Fraktion kann in an sich bekannter Weise in die Trennkolonne (10) zurückgeführt werden, um dort eine definierte Destillat-Zusammensetzung einstellen zu können.

Die schwerer siedende Fraktion fällt im Sumpf (14) der Trennkolonne (10) an und wird über eine Abführleitung (30) aus der Trennkolonne (10) und aus der Lösungsmittel-Rückgewinnungsanlage (32) entfernt. Diese Fraktion kommt dann wieder vorzugsweise in der Spinnvorrichtung zum Einsatz.

Die einzelnen Stoffströme werden über Pumpen in den jeweiligen Zu- und Ableitungen gefördert und gesteuert. In der Fig. sind Pumpen (25), (26) und (27) schematisch dargestellt.

## Patentansprüche

1. Verfahren zur Aufarbeitung von Gemischen, welche organische Lösungsmitte und schwersiedende Bestandteile und gegebenenfalls Wasser enthalten, umfassend die Maßnahmen:
a) Einbringen des Gemisches in eine Aufkonzentriervorrichtung (2) einer Lösungsmittel-Rückgewinnungsanlage (32),
b) Aufkonzentrieren des Gemisches in besagter Aufkonzentriervorrichtung (2) durch Abdampfen eines Teils einer leichtflüchtigen Fraktion und Zuführen dieser leichtflüchtigen Fraktion zu einer Trennkolonne (10),
c) Ableiten mindestens eines Teils des aufkonzentrierten Gemisches aus der Aufkonzentriervorrichtung (2) und Einleiten dieses Teils in eine Trennvorrichtung (7), worin besagte schwersiedende Bestandteile aus besagtem aufkonzentriertem Gemisch abgetrennt werden und aus der Lösungsmittel-Rückgewinnungsanlage (32) ausgeschleust werden,
d) Ableiten des von besagten schwersiedenden Bestandteilen befreiten aufkonzentrierten Gemisches aus besagter Trennvorrichtung (7) und Zuführen besagten Gemisches zusammen mit der leichtflüchtigen Fraktion aus Schritt b) zu einer Trennkolonne (10),
e) Auftrennen des Gemisches aus Schritt d) in der Trennkolonne (10) in eine leichter siedende Fraktion, welche über den Kolonnenkopf (17) abgezogen wird und in eine schwerer siedende Fraktion, welche über den Sumpf (14) aus der Kolonne entfernt wird, und
f) Ableiten zumindest eines Teils der nach Schritt e) erhaltenen leichter siedenden Fraktion und der schwerer siedenden Fraktion aus der Lösungsmittel-Rückgewinnungsanlage (32).

2. Verfahren nach Anspruch 1, dadurch gekennzeichnet, daß das zu trennende Gemisch ein wässriges Gemisch, insbesondere ein gebrauchtes Spinnbad, ist, welches 10 bis 85 Gew.% organische aprotische Lösungsmittel, 10 bis 85 Gew.% Wasser und weniger als 15 Gew.% Salze enthält.

3. Verfahren nach Anspruch 2, dadurch gekennzeichnet, daß das organische aprotische Lösungsmittel N-Methylpyrrolidon ist.

4. Verfahren nach Anspruch 2, dadurch gekennzeichnet, daß das Salz Calciumchlorid ist.

5. Verfahren nach Anspruch 1, dadurch gekennzeichnet, daß als Aufkonzentriervorrichtung (2) ein Verdampfer eingesetzt wird.

6. Verfahren nach Anspruch 1, dadurch gekennzeichnet, daß ein Teil des in Schritt b) aufkonzentrierten Gemisches in besagte Aufkonzentriervorrichtung (2) zurückgeführt wird.

7. Verfahren nach Anspruch 1, dadurch gekennzeichnet, daß als Trennkolonne (10) eine Rektifikationskolonne eingesetzt wird.

8. Verfahren nach Anspruch 1, dadurch gekennzeichnet, daß als Trennvorrichtung (7) ein Dünnschichtverdampfer eingesetzt wird.

9. Verfahren nach Anspruch 1, dadurch gekennzeichnet, daß zumindest die Aufkonzentriervorrichtung (2) oder die Trennvorrichtung (7) oder die Trennkolonne (10) unter Vakuum betrieben wird.

10. Lösungsmittel-Rückgewinnungsanlage (32) zur Aufarbeitung von Gemischen, welche organische Lösungsmittel, schwersiedende Bestandteile, insbesondere Salze und gegebenenfalls Wasser enthalten, umfassend eine Aufkonzentriervorrichtung (2), eine Trennvorrichtung (7) und eine Trennkolonne (10), die in folgender Weise miteinander verbunden sind und von Stoffströmen durchlaufen werden:
A) Zuleitung (1) welche in die Aufkonzentriervorrichtung (2) mündet und zum Einbringen eines Gemisches in die Aufkonzentriervorrichtung (2) der Lösungsmittel-Rückgewinnungsanlage (32) dient,
B) Ableitung (4) zum Abführen einer verdampften leichtflüchtigen Fraktion aus besagter Aufkonzentriervorrichtung (2) und zum Zuleiten dieser Fraktion zu einer Trennkolonne (10),
C) Ableitung (3) zum Abführen des Konzentrats bestehend aus den schwerer siedenden Bestandteilen des Lösungsmittelgemisches aus der Aufkonzentriervorrichtung (2) welche Ableitung (3) in eine Trennvorrichtung (7) mündet,
D) Schleuse (33) zum Austragen der in der Trennvorrichtung (7) abgetrennten schwersiedenden Bestandteile aus der Lösungsmittel- Rückgewinnungsanlage (32),
E) Abführleitung (8) für das in der Trennvorrichtung (7) von besagten schwerlöslichen Bestandteilen gereinigte Konzentrat, welche direkt in die Trennkolonne (10) mündet oder in die Ableitung (4) zum Abführen einer verdampften leichtflüchtigen Fraktion aus der Aufkonzentriervorrichtung (2) und zusammen mit dieser in die Trennkolonne (10) mündet,
F) Leitung (20) zum Ableiten des erhaltenen Kondensats aus der Trennkolonne (10), und
G) Abführleitung (30), über welche die in der Trennkolonne (10) erhaltene schwerer siedende Fraktion aus dem Sumpf (14) entfernt wird und welche zum Ausschleusen der schwerer siedenden Fraktion aus der Lösungsmittel-Rückgewinnungsanlage (32) dient.

11. Lösungsmittel-Rückgewinnungsanlage (32) nach Anspruch 10, dadurch gekennzeichnet, daß die Aufkonzentriervorrichtung (2) ein Verdampfer ist.

12. Lösungsmittel-Rückgewinnungsanlage (32) nach Anspruch 10, dadurch gekennzeichnet, daß die Trennkolonne (10) eine Rektifikationskolonne ist.

13. Lösungsmittel-Rückgewinnungsanlage (32) nach Anspruch 10, dadurch gekennzeichnet, daß die Trennvorrichtung (7) ein Dünnschichtverdampfer ist.

14. Lösungsmittel-Rückgewinnungsanlage (32) nach Anspruch 10, dadurch gekennzeichnet, daß die Abführleitung (8) für das in der Trennvorrichtung (7) von besagten schwerlöslichen Bestandteilen gereinigte Konzentrat über einen Zulauf (11) in die Trennkolonne (10) geführt wird, wobei der Zulauf (11) in der Höhe des Kolonnenkörpers angebracht ist, in welcher die Zusammensetzung der jeweiligen Fraktion im Innern der Kolonne in etwa der Zusammensetzung des zugeführten Gemisches entspricht.
